# EUROPÄISCHE PATENTANMELDUNG

(11) **EP 1 918 672 A1**
(43) Veröffentlichungstag der Anmeldung: **07.05.2008**
(21) Anmeldenummer: 06405461.2
(22) Anmeldetag: 02.11.2006
(51) Int. Cl.: G01B 7/06, B29C 47/92

(54) **Vorrichtung zum Verringern der Reibung zwischen zwei Körpern**

(71) Anmelder: Hch. Kündig & Cie. AG, 8630 Rüti/ZH (CH)
(72) Erfinder: Weber, Philipp, 8630 Rüti/ZH (CH)
(74) Vertreter: Hammer, Bruno

(57) **Zusammenfassung**

Die Vorrichtung ist geeignet, die Reibung zwischen zwei sich relativ zueinander bewegenden Körpern (1, 2) zu reduzieren. Die beiden Körper (1, 2), die sich zueinander relativ bewegen, können sich ständig oder zeitweise berühren, oder zueinander einen geringen Abstand von z.B. bis zu einem Millimeter aufweisen. Der Abstand kann variieren. Bei der Relativbewegung der beiden Körper (1, 2) kann beispielsweise der eine Köper ein Sensor (1) sein der fest installiert ist, und der zweite Körper kann eine Folie (2) sein, die sich mit weitgehend konstanter Geschwindigkeit bewegt. Die Vorrichtung weist eine Vibrationseinrichtung (3, 4, 5, 6) zum Vibrieren mindestens eines der Körper (1, 2) auf. Die Vibrationsbewegungen des vibrierten Körpers können beliebige Muster aufweisen.

## Beschreibung

Die Erfindung bezieht sich auf eine Vorrichtung zum Verringern der Reibung zwischen zwei Körpern und insbesondere zur Verringerung der Reibung zwischen Sensor und Messgut einer Dickenmessvorrichtung nach dem Oberbegriff des unabhängigen Patentanspruchs 1.

Bei bisherigen Ausführungen zur Verringerung der Reibung werden die Dickesensoren für Plastikfolien beispielsweise mit auf diesen Folien gut gleitenden Materialien beschichtet (z.B. PTFE, d.h. Polytetrafluorethylen, bzw. Teflon™), als rollende Dickensensoren ausgeführt (EP 01182423) oder es wird ein Luftkissen zwischen Sensor und Messgut aufgebaut (UK 1 436 698).

Für die Dickenmessung an Folien, auf denen Körper wie Sensoren sehr schlecht gleiten, sogenannten stumpfen Folien oder Folien welche sogar klebrig sind, beispielsweise mit EVA (Ethylenvinylacetat)) in der, den Sensor berührenden Aussenschicht, ist auch eine Oberflächenbeschichtung mit nahezu ideal gleitendem Material (z.B. PTFE) ungenügend. Rollende Dickensensoren und extrem berührungsarme Dickensensoren mit Luftkissen sind in der Konstruktion aufwendig und abstandssensitiv.

Die Dickenmessung von Kunststofffolien erfolgt bei Blasfolienanlagen aus prozesstechnischen Gründen, bei Flachfolienanlagen aus Kostengründen idealerweise mit einem reflektiven Messverfahren. Bekannte Messverfahren sind zum Beispiel solche die kapazitiv, optisch, oder mit ionisierender Strahlung wirken.

Bei all diesen Messverfahren hat der Abstand zum Messgut einen gewissen Einfluss auf die Messgenauigkeit. Der berührende Messbetrieb (Abstand 0) wäre messtechnisch optimal. In gewissen Grenzen kann der Abstand vom Sensor zur Folie gemessen und die Messsignale können rechnerisch (mathematisch) kompensiert werden (EP0801290, EP1681531).

Aufgabe der Erfindung ist es, die Reibung zwischen zwei Körpern die sich berühren oder zwischen denen nur ein geringer Abstand von höchstens einem Millimeter besteht z. B. zwischen Sensoroberfläche und Messgut, dermassen zu verringern, dass sehr stumpfe Folien berührend (Abstand 0) oder nahezu berührend (Abstand gegen 0) gemessen werden können.

Diese Aufgabe, wird erfindungsgemäss mit einer Vorrichtung gelöst, welche die Merkmale im kennzeichnenden Teil des unabhängigen Anspruchs aufweist, Weiter bezieht sich die Erfindung auf eine Einrichtung zum Herstellen von Kunststofffolien mit einer derartigen Vorrichtung. Die abhängigen Ansprüche beziehen sich auf vorteilhafte Ausführungsformen der Erfindung.

Die Vibrationsbewegungen können in allen drei Dimensionen, transversal, drehend, taumelnd oder auch kombiniert erfolgen. Der Hub, die Frequenz, der Drehwinkel und das Bewegungsmuster z.B. Rechteck, Sägezahn oder Sinus der Vibration haben einen entscheidenden Einfluss auf die Verringerung der Reibung.

Die Vibration kann beispielsweise mittels Piezo-Aktoren, Antrieb mit elektromagnetischem Wechselfeld oder mit einer Unwucht an einem drehenden Teil erzeugt werden.

Die Erfindung wird nachstehend anhand der beiden Figuren, welche schematisch ein Beispiel einer erfindungsgemässen Messvorrichtung an einer Kunststoff-Blasfolie zeigen, näher erläutert.

Es zeigen:
- Fig. 1: eine schematischen Aufriss der Dickenmessvorrichtung an der Blasfolie einer Vorrichtung zum Herstellen von Kunststofffolien
- Fig. 2: eine schematischen Grundriss der Vorrichtung mit Dickenmessvorrichtung von Fig. 1

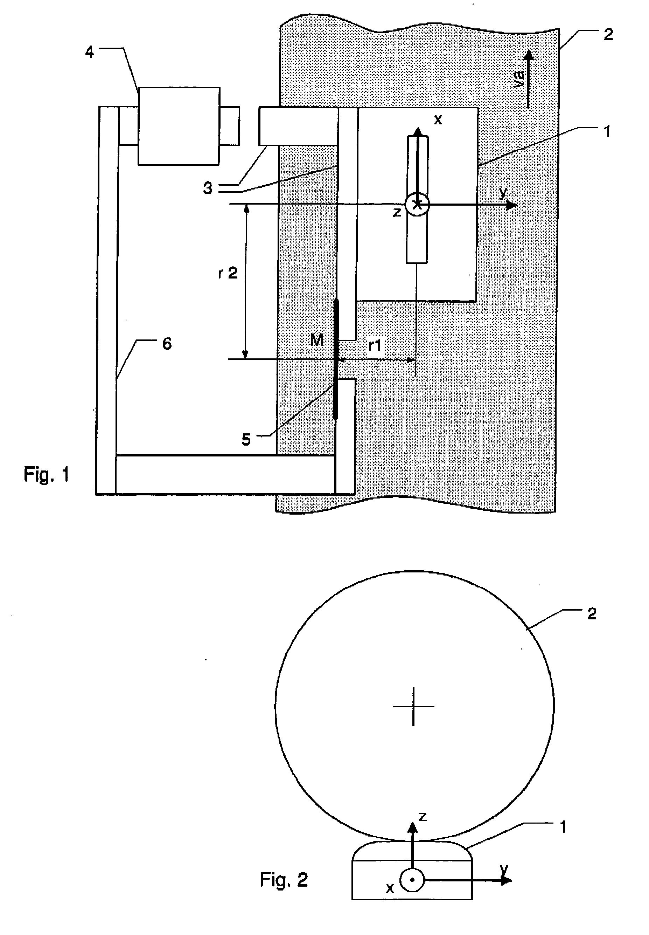

Fig. 1 und Fig. 2 zeigen eine mögliche Anordnung eines Sensors 1 an einer Folie 2. Fig. 2 zeigt im Grundriss die Position des Sensors 1 am zylindrischen Teil einer Blasfolie 2. Fig. 1 zeigt im Aufriss die Anordnung eines Sensors (1), welcher eine Vibrationsbewegung ausführen kann. Die Sensor 1 weist eine Sensoroberfläche auf, welche der Folie 2 zugewandt ist und welche diese berühren kann. Die Folie bewegt sich in Produktionsrichtung mit der Abzugsgeschwindigkeit va. Diese liegt üblicherweise in einem Bereich von etwa 1 bis 300 m/Min., typisch sind etwa 50m/Min. Der Sensor ist auf einer Trägerplatte 3 über eine Blattfeder 5 so mit dem Trägersystem 6 verbunden, dass eine Schwingung transversal in y-Richtung bzw um eine Achse parallel zur z-Richtung durch den Mittelpunkt M im Abstand r1, r2 stattfinden kann. Die Vibration kann zum Beispiel durch einen Elektromagneten 4 erzeugt werden. Eine geeignete Amplitude liegt im Bereich von etwa 1mm. Eine mögliche Frequenz ist z.B. 50 Hz. Es können aber auch andere Vibrationsfrequenzen geeignet sein, je nach Oberflächebeschaffenheit von Folie und Sensoroberfläche und den Reibungsverhältnissen zwischen Folie und Sensoroberfläche.

Wird die Vibration in z-Richtung transversal oder drehend um eine Achse parallel zur Richtung der y-Achse durch den Punkt M im Abstand r1, r2 ausgeführt, so ist es möglich, dass der Sensor die Folie nur zeitweise berührt. Wird die Vibration in y-Richtung ausgeführt, so bleibt der Andruck oder der Abstand zur Folie konstant. Vibrationen in x-Richtung variieren die Relativgeschwindigkeit zwischen Folie und Sensor.

Wird die Vibration als Drehbewegung um eine Achse auf der Messkopf-Oberfläche ausgeführt, so ändert die Anpresskraft bzw die Distanz zur Folie auf allen Punkten des Sensors neben der Achse.

Die Vorrichtung ist geeignet, die Reibung zwischen zwei sich relativ zueinander bewegenden Körpern 1, 2 zu reduzieren. Die beiden Körper 1, 2, die sich zueinander relativ bewegen, können sich ständig oder zeitweise berühren, oder zueinander einen geringen Abstand von z.B. bis zu einem Millimeter aufweisen. Der Abstand kann variieren. Bei der Relativbewegung der beiden Körper 1, 2 kann beispielsweise der eine Köper ein Sensor 1 sein der fest installiert ist, und der zweite Körper kann eine Folie 2 sein, die sich mit weitgehend konstanter Geschwindigkeit bewegt. Die Vorrichtung weist eine Vibrationseinrichtung 3, 4, 5, 6 zum Vibrieren mindestens eines der Körper 1, 2 auf. Die Vibrationsbewegungen des vibrierten Körpers können beliebige Muster aufweisen.

## Patentansprüche

**1.** Vorrichtung zum Reduzieren der Reibung zwischen einem ersten und einem zweiten Körper (1; 2), die sich gegeneinander bewegen und sich berühren oder zueinander einen geringen Abstand aufweisen, **gekennzeichnet durch** eine Vibrationseinrichtung (3, 4, 5, 6) zum Vibrieren mindestens eines der Körper(1, 2), wobei die Vibrationsbewegungen des vibrierten Körpers beliebige Muster aufweisen können.

**2.** Vorrichtung nach Anspruch 1, bei welcher der eine Körper eine Messvorrichtung mit einem Sensor (1) ist und der zweite Körper eine Folie (2) aus nichtleitendem Material insbesondere eine Kunststofffolie ist.

**3.** Messvorrichtung nach Anspruch 2 zum Messen der Dicke von sich bewegenden Folien aus nichtleitendem Material, insbesondere von Kunststofffolien, mit einem Sensor (1), der eine Sensoroberfläche aufweist, welche die zu messende Folie wenigstens zeitweise berührt, und die Messvorrichtung eine Vibrationseinrichtung (3, 4, 5, 6) aufweist, mit welcher der ganze Sensor (1) und/oder nur die Sensoroberfläche vibriert wird, um die Reibung zwischen Folie (2) und Sensoroberfläche zu reduzieren.

**4.** Messvorrichtung nach Anspruch 2 oder 3, bei welcher die Vibrationsrichtung im dreidimensionalen Raum und/oder die Vibrationsfrequenzen und/oder das Vibrationsmuster der Vibrationseinrichtung (3, 4, 5, 6) wählbar sind.

**5.** Messvorrichtung nach einem der Ansprüche 2 bis 4, bei welcher die Vibration (x, y, z) des Sensors (1) oder nur der Sensoroberfläche wenigstens angenähert parallel zur Oberfläche der sich bewegenden Folie (2) erfolgt.

**6.** Messvorrichtung nach einem der Ansprüche 2 bis 5, bei welcher die Vibrationseinrichtung (3, 4, 5, 6) elektromagnetisch und/oder piezoelektrisch arbeitet, oder die Vibration mit einer Unwucht an einem drehenden Teil erzeugt wird.

**6.** Messvorrichtung nach einem der Ansprüche 2 bis 5 bei der die Vibrationsparameter wählbar sind, entsprechend der erforderlichen Messgenauigkeit und den Reibungsverhältnissen zwischen Sensoroberfläche und Oberfläche der Folie (2), und/oder den Reibungskoeffizienten der Oberfläche der Folie (2).

**7.** Messvorrichtung nach einem der Ansprüche 2 bis 6, bei welcher der Sensor (1) optisch, kapazitiv oder mit ionisierender Strahlung, wie β-Strahlung oder γ-Strahlung arbeitet.

**8.** Einrichtung zum Herstellen von Kunststofffolien (2), mit einer Messvorrichtung nach einem der Ansprüche 2 bis 7, bei welcher die Sensoroberfläche reibungsarm beschichtet ist und/oder im Betrieb der Einrichtung der Sensor (1) die Oberfläche der Folie (2) berührt oder zwischen Folie (2) und Sensoroberfläche ein Luftkissen besteht.
